# EUROPÄISCHE PATENTANMELDUNG

(11) **EP 3 616 862 A1**
(43) Veröffentlichungstag der Anmeldung: **04.03.2020**
(21) Anmeldenummer: 18190891.4
(22) Anmeldetag: 27.08.2018
(51) Int. Cl.: B26D 5/00, G05B 19/18, B23K 37/00, B23K 26/00, B26D 7/00, B26F 3/00, G05B 19/19

(54) **FÜHREN EINES SCHNEIDKOPFES GEGENÜBER EINEM SCHNEIDGUT**

(71) Anmelder: Siemens Aktiengesellschaft, 80333 München (DE)
(72) Erfinder: Forster, Gerhard, 90592 Schwarzenbruck (DE); Geissdörfer, Klaus, 91056 Erlangen (DE); Hamm, Carsten, 91330 Eggolsheim (DE); Schäfers, Elmar, 90763 Fürth (DE)

(57) **Zusammenfassung**

Die Erfindung betrifft ein Verfahren zum Führen eines Schneidkopfes (12) gegenüber einem Schneidgut (14), wobei
- wenigstens ein Positions-Sollwert (x) und wenigstens ein Geschwindigkeits-Sollwert (v) durch eine Interpolatoreinheit (16) bereitgestellt wird,
- eine Position und eine Geschwindigkeit des Schneidkopfes (12) mittels einer Antriebseinheit (18) abhängig vom Positions-Sollwert (x) und vom Geschwindigkeits-Sollwert (v) eingestellt wird, indem ein Steuersignal (20) für die Antriebseinheit (18) ermittelt wird,
- mittels eines Abstandsensors (28) ein Abstand zwischen dem Schneidkopf (12) und dem Schneidgut (14) erfasst und ein entsprechendes Abstandsignal (30) bereitgestellt wird,
- das Abstandsignal (30) mit einem vorgegebenen Vergleichsabstand (32) verglichen und ein Abstandsteuersignal (36) ermittelt wird, und
- das Steuersignal (20) ergänzend abhängig vom Abstandsteuersignal (36) ermittelt wird,
dadurch gekennzeichnet, dass
der Vergleichsabstand (32) vom Abstandsignal (30) subtrahiert und die Differenz dem um eine erste Zeitspanne (38) verzögerten Ist-Stellungssignal (24) überlagert wird, um das Abstandsteuersignal (36) zu ermitteln.

## Beschreibung

Die Erfindung betrifft ein Verfahren zum Führen eines Schneidkopfes gegenüber einem Schneidgut, in das mittels eines durch den Schneidkopf ausgeführten Schneidverfahrens aufgrund einer Relativbewegung des Schneidkopfes in Bezug auf das Schneidgut ein Schnitt eingebracht wird, wobei wenigstens ein Positions-Sollwert und wenigstens ein Geschwindigkeits-Sollwert zum Führen des Schneidkopfes durch eine Interpolatoreinheit bereitgestellt wird, eine Position und eine Geschwindigkeit des Schneidkopfes gegenüber dem Schneidgut mittels einer Antriebseinheit abhängig vom Positions-Sollwert und vom Geschwindigkeits-Sollwert eingestellt wird, indem aus dem Positions-Sollwert ein Soll-Stellungssignal ermittelt, ein von der Antriebseinheit bereitgestelltes Ist-Stellungssignal mit dem Soll-Stellungssignal im Rahmen eines ersten Vergleichs verglichen und ein Steuersignal für die Antriebseinheit abhängig vom ersten Vergleich und dem Geschwindigkeits-Sollwert ermittelt wird, wobei mittels eines Abstandsensors ein Abstand zwischen dem Schneidkopf und dem Schneidgut erfasst und ein entsprechendes Abstandsignal bereitgestellt wird, das Abstandsignal mit einem vorgegebenen Vergleichsabstand im Rahmen eines zweiten Vergleichs verglichen und abhängig vom zweiten Vergleich ein Abstandsteuersignal ermittelt wird, und das Steuersignal ergänzend abhängig vom Abstandsteuersignal ermittelt wird. Darüber hinaus betrifft die Erfindung auch ein Rechnerprogrammprodukt. Schließlich betrifft die Erfindung auch eine Steuereinrichtung zum Führen eines Schneidkopfes gegenüber einem Schneidgut, um in das Schneidgut mittels eines durch den Schneidkopf ausgeführten Schneidverfahrens aufgrund einer Relativbewegung des Schneidkopfes in Bezug auf das Schneidgut einen Schnitt einzubringen, wobei die Steuerung ausgebildet ist, wenigstens einen Positions-Sollwert und wenigstens einen Geschwindigkeits-Sollwert, die zum Führen des Schneidkopfes durch eine Interpolatoreinheit bereitgestellt sind, zu nutzen, ein Steuersignal für eine Antriebseinheit abhängig vom Positions-Sollwert und vom Geschwindigkeits-Sollwert bereitzustellen, um eine Position, die auch eine Orientierung umfassen kann, und eine Geschwindigkeit des Schneidkopfes gegenüber dem Schneidgut einzustellen, zu welchem Zweck die Steuereinrichtung ausgebildet ist, aus dem Positions-Sollwert ein Soll-Stellungssignal zu ermitteln, ein von der Antriebseinheit bereitgestelltes Ist-Stellungssignal mit dem Soll-Stellungssignal im Rahmen eines ersten Vergleichs zu vergleichen und das Steuersignal für die Antriebseinheit abhängig vom ersten Vergleich und dem Geschwindigkeits-Sollwert zu ermitteln, ein mittels eines Abstandsensors bereitgestelltes Abstandsignal, der einen Abstand zwischen dem Schneidkopf und dem Schneidgut erfasst zu nutzen, das Abstandsignal mit einem vorgegebenen Vergleichsabstand im Rahmen eines zweiten Vergleichs zu vergleichen und abhängig vom zweiten Vergleich ein Abstandsteuersignal zu ermitteln, und das Soll-Stellungssignal ergänzend abhängig vom Abstandsteuersignal zu ermitteln.

Verfahren, Steuereinrichtungen sowie auch Rechnerprogrammprodukte der gattungsgemäßen Art sind im Stand der Technik umfänglich bekannt, sodass es eines gesonderten druckschriftlichen Nachweises hierfür nicht bedarf. Diese finden häufig Einsatz beim Laserschneiden, beim Wasserstrahlschneiden und/oder dergleichen. Nicht nur beim Laserschneiden sondern auch bei anderen derartigen Schneidverfahren, insbesondere beim Laserschneiden von Blechen, wird eine möglichst genaue Abstandsregelung zwischen dem Schneidkopf sowie dem Schneidgut, beispielsweise dem Blech, benötigt, weil die Einhaltung des Abstands zwischen dem Schneidkopf und dem Schneidgut für einen bestimmungsgemäßen Schneidvorgang wichtig ist. Dies gilt insbesondere für den Fall, dass das Schneidgut, beispielsweise das Blech, nicht eben ist, sondern zum Beispiel zwischen Auflagepunkten durchhängt oder dergleichen. Deshalb ist es üblich, den Schneidkopf beziehungsweise das Blech oder auch beide mittels wenigstens einer geeigneten Antriebseinrichtung nachzuführen, um einen vorgegebenen Abstand für den Schneidvorgang realisieren zu können.

Um während des Schneidvorgangs einen vorgegebenen Abstand zwischen dem Schneidgut und dem Schneidkopf einhalten zu können, ist es üblich, einen kapazitiven Abstandsensor vorzusehen. Zwar hat sich der Einsatz des kapazitiven Abstandsensors bewährt, jedoch erweist es sich als nachteilig, dass nach Erfassen eines momentanen Abstands eine gewisse Zeitspanne vergeht, bis der Abstandsensor ein zugeordnetes Abstandsignal bereitstellt. Daraus ergibt sich der Nachteil, dass gegenüber einem Motorgeber, der das Ist-Stellungssignal des Schneidkopfes bereitstellt, eine entsprechende Zeitverzögerung auftritt.

Darüber hinaus wird durch den Abstandsensor mit dem Abstandsignal nur eine relative Positionsinformation, nämlich der erfasste Abstand, bereitgestellt. Dies erweist sich insbesondere nachteilig für eine Abstandsregelung, die einen derartigen kapazitiven Abstandsensor nutzt. Darüber hinaus bewirken die vorgenannten Nachteile, dass speziell bei einem sensorgeführten Anfahren des Schneidkopfes an das Schneidgut ein starkes Überschwingen der Bewegung auftreten kann.

Der Erfindung liegt die Aufgabe zugrunde, das Führen des Schneidkopfes in Bezug auf das Schneidgut, insbesondere bei einem sensorgeführten Anfahren zu verbessern.

Als Lösung werden mit der Erfindung ein Verfahren, ein Rechnerprogrammprodukt sowie eine Steuereinrichtung gemäß den unabhängigen Ansprüchen vorgeschlagen.

Vorteilhafte Weiterbildungen ergeben sich durch Merkmale der abhängigen Ansprüche.

Bezüglich eines gattungsgemäßen Verfahrens wird insbesondere vorgeschlagen, dass der Vergleichsabstand vom Abstandsignal subtrahiert und die hierdurch ermittelte Differenz dem um eine erste Zeitspanne verzögerten Ist-Stellungssignal überlagert wird, um das Abstandsteuersignal zu ermitteln, wobei die erste Zeitspanne von einer Verzögerungszeit des Abstandsensors abhängig ist, die der Abstandsensor benötigt, um zu einem erfassten Abstand das entsprechende Abstandsignal bereitzustellen.

Bezüglich eines gattungsgemäßen Rechnerprogrammprodukts wird insbesondere vorgeschlagen, dass dieses ein Programm für eine Rechnereinheit mit Programmkodeabschnitten des Programms zum Ausführen der Schritte des Verfahrens der Erfindung umfasst, wenn das Programm durch die Rechnereinheit ausgeführt wird, sodass die Rechnereinheit ein Steuersignal ermittelt.

Bezüglich einer gattungsgemäßen Steuereinrichtung wird insbesondere vorgeschlagen, dass die Steuereinrichtung ausgebildet ist, den Vergleichsabstand vom Abstandsignal zu subtrahieren und die hierdurch ermittelte Differenz dem um eine erste Zeitspanne verzögerten Ist-Stellungssignal zu überlagern, um das Abstandsteuersignal zu ermitteln, wobei die erste Zeitspanne von einer Verzögerungszeit des Abstandsensors abhängig ist, die der Abstandsensor benötigt, um zu einem erfassten Abstand das entsprechende Abstandsignal bereitzustellen.

Die Erfindung geht aus von einer Abstand-Regelschleife, die eine Proportionalverstärkung beziehungsweise Gain (KV-Wert) nutzt und die zu einer normalen Achs-Regelschleife überlagert ist. Üblicherweise muss im Stand der Technik die Proportionalverstärkung so klein gewählt werden, dass auch beim Anfahren des Schneidkopfes an das Schneidgut kein übermäßiges Überschwingen und insbesondere auch keine Kollision des Schneidkopfes mit dem Schneidgut auftritt. Dies begrenzt natürlich eine Regelungsdynamik, weshalb ein sensorgeführter Anfahrvorgang im Vergleich zu einer normalen Positionierbewegung nur vergleichsweise langsam ausgeführt werden kann.

Mit der Erfindung können die Nachteile des Stands der Technik überwunden werden, indem eine neue Reglerstruktur geschaffen wird, die die vom Motorgeber, auch Motor-Encoder genannt, verfügbare Achs-Ist-Position beziehungsweise den Ist-Stellungswert mit in die Abstandsregelung einbezieht. Damit eine entsprechend zuverlässige Funktionalität gewährleistet werden kann, lehrt die Erfindung, dass die Achs-Ist-Position beziehungsweise das entsprechende Ist-Stellungssignal dabei entsprechend der ersten Zeitspanne zeitverzögert berücksichtigt wird. Dadurch können das Ist-Stellungssignal sowie das Abstandsignal des Abstandsensors zeitlich synchronisiert werden, sodass eine zuverlässige Funktionalität bereitgestellt werden kann.

Durch diese erfindungsgemäße Reglerstruktur braucht die im Stand der Technik übliche Abstandsreglung nicht mehr vorgesehen zu werden. Zumindest braucht sie jedoch für das Anfahren des Schneidkopfes gegenüber dem Schneidgut nicht aktiviert zu sein. Vielmehr kann ein Abstandsteuersignal bereitgestellt werden, welches eine absolute Position des Schneidguts liefert. Dies erlaubt es nicht nur, das sensorgeführte Anfahren des Schneidkopfes an das Blech beziehungsweise umgekehrt zu verbessern, sondern es kann darüber hinaus auch eine erheblich stabilere Regelungsfunktion bezüglich des Abstands zwischen dem Schneidkopf und dem Schneidgut erreicht werden. Das beim sensorgeführten Anfahren beim Stand der Technik üblicherweise auftretende Überschwingen kann durch die Erfindung deutlich reduziert werden. Dadurch kann natürlich auch das Führen des Schneidkopfes insgesamt verbessert werden. Gleichwohl kann vorgesehen sein, dass für einen eigentlichen Schneidvorgang des Schneidverfahrens, bei dem der Schneidkopf aktiviert ist, um in vorgegebener Weise den Schnitt in das Schneidgut einbringen zu können, weiterhin die übliche Abstandsreglung genutzt wird.

Die übliche Abstandsreglung kann vorsehen, dass das Steuersignal dadurch ergänzend abhängig vom Abstandsteuersignal ermittelt wird, dass das Abstandsteuersignal zunächst verstärkt wird, wobei aus dem verstärkten Signal, welches als Stellsignal für den Abstandsregler dienen kann, ein Zusatzsollwert für die Geschwindigkeit und durch Integration dieses Signals ein Zusatzsollwert für die Position ermittelt werden, die dann ergänzend zum Ermitteln des Steuersignals genutzt werden.

Darüber hinaus eröffnet die Erfindung auch eine Möglichkeit des Umschaltens zwischen den Betriebsarten, wie Anfahren, Verfahren während des Schneidvorgangs und/oder dergleichen, auf einfache Weise. So können während des Schneidverfahrens Abweichungen von einer idealen Blechgeometrie weiterhin unter Nutzung der Abstandsreglung ausgeglichen werden. Gleichwohl kann für das Anfahren das sensorgesteuerte Verfahren des Schneidkopfes genutzt werden, weil in der Regel keine dynamische Änderung der Lage des Schneidguts zu erwarten sein dürfte. Wenn die Regelung gemäß der Erfindung nur für das Anfahren genutzt zu werden braucht, kann eine größere Verstärkung bei der Abstandsregelung verwendet werden. Das Umschalten die übliche Abstandsregelung kann insbesondere kontinuierlich, aber auch beispielsweise zu vorgegebenen Zeitpunkten oder Positionen, erfolgen.

Der Schneidkopf ist ein mechanisches Element, mittels welchem der Schneidvorgang im Schneidgut ausgeführt werden kann. Zu diesem Zweck kann der Schneidkopf zum Beispiel als Laser-Schneidkopf, aber auch als Wasserstrahl-Schneidkopf oder dergleichen ausgebildet sein. Die Erfindung ist jedoch nicht auf die Anwendung bei solchen Schneidköpfen begrenzt, sondern sie kann insbesondere auch bei beliebigen Schneidköpfen zum Einsatz kommen. Der Schneidkopf führt das Schneidverfahren aus, mit dem in das Schneidgut der Schnitt eingebracht werden kann.

Auch wenn die Erfindung sich insbesondere auf das Schneiden von Blech bezieht, so ist die Erfindung jedoch hierauf nicht beschränkt und kann dem Grunde nach bei einem nahezu beliebigen Schneidgut zum Einsatz kommen. Als Schneidgut kann neben Blech natürlich auch ein anderer Körper zum Einsatz kommen, der geschnitten werden soll, und der beispielsweise eine von einer Ebene abweichende geometrische Struktur aufweist. Darüber hinaus kann der Körper natürlich nahezu beliebige Konturen aufweisen, insbesondere kann er natürlich je nach Bedarf auch unterschiedliche Dicken an unterschiedlichen Positionen aufweisen. Als Material für das Schneidgut kann neben Metall auch Kunststoff, Keramik, Verbundwerkstoffe und/oder dergleichen zum Einsatz kommen.

Das Führen des Schneidkopfes gegenüber dem Schneidgut bezieht sich insbesondere darauf, den Schneidkopf gegenüber dem Schneidgut in eine vorgegebene Position zu verfahren, und insbesondere auch darauf, den Schneidkopf während des Schneidverfahrens gegenüber dem Schneidgut zu verfahren. Dabei kann es vorgesehen sein, dass nicht nur der Schneidkopf mittels einer Antriebseinheit verfahren wird, sondern es kann darüber hinaus auch vorgesehen sein, dass das Schneidgut selbst gegenüber einem Schneidkopf verfahren wird. Natürlich können diese Ausgestaltungen auch miteinander kombiniert sein.

Die Interpolatoreinheit ist eine Einrichtung, mittels der der Schneidkopf in geeigneter Weise zum Durchführen des Schneidverfahrens geführt wird. Zu diesem Zweck gibt die Interpolatoreinheit wenigstens einen Positions-Sollwert und wenigstens einen Geschwindigkeits-Sollwert vor, die zum Führen des Schneidkopfes genutzt werden. Häufig ist vorgesehen, dass die Interpolatoreinheit eine Folge von entsprechenden Positions-Sollwerten und/oder Geschwindigkeits-Sollwerten vorgibt, beispielsweise entsprechend des Verlaufs des in das Schneidgut einzubringenden Schnitts oder dergleichen. Darüber hinaus können derartige Positions-Sollwerte und/oder Geschwindigkeits-Sollwerte auch für das sensorgeführte Anfahren des Schneidkopfes gegenüber dem Schneidgut bereitgestellt werden. Die Interpolatoreinheit dient dazu, ein vorgegebenes Schneidverfahren mittels des Schneidkopfes am Schneidgut durchführen zu können.

Die Position und die Geschwindigkeit des Schneidkopfes gegenüber dem Schneidgut kann mittels der Antriebseinheit abhängig vom wenigstens einen Positions-Sollwert und/oder vom wenigstens einen Geschwindigkeits-Sollwert eingestellt werden. Zu diesem Zweck kann die Antriebseinheit eine elektrische Antriebseinheit, eine pneumatische Antriebseinheit, eine hydraulische Antriebseinheit und/oder dergleichen sein. Die Antriebseinheit kann dazu dienen, den Schneidkopf in gewünschter Weise zu verfahren. Darüber hinaus kann die Antriebseinheit aber auch dazu dienen, das Schneidgut in gewünschter Weise zu verfahren. Auch eine Kombination hiervon kann vorgesehen sein.

Zum Einstellen der Position und der Geschwindigkeit des Schneidkopfes gegenüber dem Schneidgut mittels der Antriebseinheit wird aus dem Positions-Sollwert ein Soll-Stellungssignal ermittelt, welches einer Stellung beziehungsweise einer Position des Schneidkopfes entspricht. Ein von der Antriebseinheit bereitgestelltes Ist-Stellungssignal, welches beispielsweise durch den Motor-Encoder oder dergleichen bereitgestellt sein kann, wird im Rahmen eines ersten Vergleichs mit dem Soll-Stellungssignal verglichen. Abhängig vom ersten Vergleich und dem Geschwindigkeits-Sollwert wird dann ein Steuersignal für die Antriebseinheit ermittelt.

Zu diesem Zweck kann vorgesehen sein, dass ein Vergleichssignal des ersten Vergleichs zunächst in geeigneter Weise verstärkt wird, bevor das verstärkte Signal dem Geschwindigkeits-Sollwert überlagert wird. Dadurch kann die Achs-Regelschleife gebildet werden, mittels der die Position und die Geschwindigkeit des Schneidkopfes eingestellt werden können. Dem Grunde nach kann dies natürlich auch für das Schneidgut vorgesehen sein.

Mittels des Abstandsensors wird der Abstand zwischen dem Schneidkopf und dem Schneidgut erfasst und ein entsprechendes Abstandsignal bereitgestellt. Zu einem jeweils erfassten momentanen Abstand wird als entsprechendes Abstandsignal ein diesem erfassten Abstand entsprechendes Abstandsignal zugeordnet. Der Abstandsensor benötigt für die Bereitstellung des entsprechenden Abstandsignals zu einem jeweils erfassten Abstand die erste Zeitspanne, die in der Regel eine abstandsensorspezifische Zeitspanne ist. Der Abstandsensor kann zum Beispiel ein kapazitiver Abstandssensor sein. Darüber hinaus kann der Abstandsensor natürlich auch ein induktiver Abstandsensor, ein optischer Abstandsensor, Kombinationen hiervon und/oder dergleichen sein. Der Abstandsensor kann dazu ausgebildet sein, den Abstand zeitdiskret zu erfassen, beispielsweise zu vorgebbaren Zeitpunkten oder dergleichen. Das Abstandsignal wird entsprechend vom Abstandsensor bereitgestellt.

Das Abstandsignal wird mit einem vorgegebenen Vergleichsabstand im Rahmen eines zweiten Vergleichs verglichen, und abhängig vom zweiten Vergleich wird ein Abstandsteuersignal ermittelt. Der Vergleichsabstand beziehungsweise der Sollabstand kann durch eine separate Abstandseinheit bereitgestellt sein. Er kann bedarfsweise für den gegebenen Schneidvorgang angepasst gewählt sein, und insbesondere kann er während des Schneidvorgangs auch verändert werden. Dies kann zum Beispiel erforderlich sein, wenn sich eine Dicke des Schneidguts während des Schneidverfahrens verändert oder dergleichen, beispielsweise wenn zur Einstellung eines möglichst optimalen Schneidergebnisses der Abstand zwischen dem Schneidkopf und dem Schneidgut entsprechend anzupassen ist oder dergleichen.

Das Steuersignal für die Antriebseinheit wird dann ergänzend abhängig vom Abstandsteuersignal ermittelt. Im Stand der Technik ist an dieser Stelle eine Abstandsregelung realisiert.

Um die durch die im Stand der Technik übliche Abstandsregelung verursachten Nachteile zu vermeiden wird erfindungsgemäß der Vergleichsabstand vom Abstandsignal des Abstandsensors subtrahiert und die hierdurch ermittelte Differenz dem um eine erste Zeitspanne verzögerten Ist-Stellungssignal überlagert. Dadurch kann eine absolute Lage beziehungsweise Position des Schneidguts beziehungsweise gegebenenfalls auch des Schneidkopfes ermittelt werden, auf deren Basis dann die weitere Verfahrensführung ausgeführt werden kann. Die im Stand der Technik vorgesehene Abstandsregelung braucht also nicht mehr vorgesehen zu sein, sodass diesbezüglich nahezu eine reine Steuerungsfunktionalität ausreicht. Die Erfindung setzt also beim Ermitteln des Abstandsteuersignals an und berücksichtigt, dass die erste Zeitspanne bei der Nutzung des Ist-Stellungssignals zu berücksichtigen ist. Dadurch kann eine erheblich stabilere und schnellere Führung des Schneidkopfes gegenüber dem Schneidgut erreicht werden.

Die Erfindung liefert somit eine neue Reglerstruktur, die die vom Motor-Encoder verfügbare Achs-Ist-Position mit in die Abstandsregelung einbezieht. Dadurch, dass bei der Erfindung die erste Zeitspanne des Abstandsensors bekannt ist, kann das um genau diesen Zeitwert verzögerte Ist-Stellungssignal genutzt werden, die Lage des Schneidguts, also insbesondere eine absolute Position des Schneidguts beziehungsweise des Blechs zu bestimmen. So kann in Verbindung mit dem Motor-Encoder beziehungsweise dem Motorgeber eine absolute Zielposition für das Anfahren des Schneidkopfes an das Schneidgut beispielsweise das Blech genutzt werden. Dadurch kann auf hinreichend schnelle und genaue Algorithmen zum Bewegen des Schneidkopfes beziehungsweise des Schneidguts auf eine absolute Zielposition hin zurückgegriffen werden.

Durch die Ermittlung der ersten Zeitspanne als eine maßgebliche Einflussgröße, die das unterschiedliche dynamische Verhalten der verwendeten Abstandsensoren prägen kann, und durch dessen, beispielsweise rechnerische, Berücksichtigung in einem Rechnerprogrammprodukt (Software) kann eine dynamikunabhängige Zielgröße, nämlich zum Beispiel eine Absolutlage des Blechs, ermittelt werden, die es ermöglicht, den bisher rein auf Regelung basierten und dadurch langsamen sensorgeführten Anfahrvorgang durch einen schnelleren, quasi-gesteuerten Anfahrvorgang zu ersetzen.

Dadurch ergibt sich, dass das sensorgeführte Anfahren schneller durchgeführt werden kann, und zwar insbesondere unter weitgehender Vermeidung von Überschwingen. Darüber hinaus kann die Proportionalverstärkung, beispielsweise für das Schneidverfahren, höher eingestellt werden, weil dieser für den Anfahrvorgang keine Rolle mehr spielt. Insbesondere weil sich die Erfindung auch dafür eignet, mittels eines Rechnerprogrammprodukts umgesetzt werden zu können, kann die Erfindung auch bei bereits bestehenden Schneidvorrichtungen, beispielsweise in Bezug auf Laserschneiden, auf einfache Weise nachgerüstet werden, nämlich besonders dann, wenn eine bereits bestehende Hardware weiter genutzt werden kann. Besonders vorteilhaft erweist sich dies auch für den Übergang vom Anfahren zum eigentlichen Schneidverfahren zu einem vorgebbaren Zeitpunkt. Einerseits kann gutes sensorgeführtes Anfahren und andrerseits eine größere Verstärkung als bislang möglich erreicht werden, wodurch sich eine verbesserte Regelungsgüte ergeben kann.

Gemäß einer Weiterbildung wird vorgeschlagen, dass der Schneidkopf zum Ermitteln der ersten Zeitspanne gemäß einem vorgegebenen Bewegungsprofil verfahren wird und das Abstandsignal des Abstandsensors entsprechend ausgewertet wird. Ein vorgegebenes Bewegungsprofil kann zum Beispiel ein periodisches Bewegungsprofil sein, beispielsweise gemäß einer Sinus- oder Cosinus-Funktion oder dergleichen. Durch eine derartige spezielle Messfahrt, die beispielsweise bei einer Inbetriebnahme oder auch bei weiteren vorgesehenen Prüf- oder Wartungszeitpunkten vorgenommen werden kann, kann ermittelt werden, mit welchem Zeitversatz der Abstandsensor auf die vorgegebene Bewegung beziehungsweise Änderung des Abstands reagiert. Dadurch kann auf einfache Weise und zuverlässig die erste Zeitspanne ermittelt werden. Die erste Zeitspanne beträgt üblicherweise einige wenige Millisekunden. Je nach Abstandsensor kann die Zeitspanne jedoch auch größer oder deutlich kleiner sein.

Das Ermitteln der ersten Zeitspanne kann zu einem vorgegebenen Zeitpunkt erfolgen. Der vorgegebene Zeitpunkt kann beispielsweise eine Inbetriebnahme oder auch ein Beginn eines Schneidvorgangs sein. Darüber hinaus kann der vorgegebene Zeitpunkt auch während des Schneidverfahrens sein, beispielsweise um Änderungen der ersten Zeitspanne während des bestimmungsgemäßen Betriebs, beispielsweise während des Schneidverfahrens, erfassen zu können und so die erfindungsgemäße Funktion auch während des bestimmungsgemäßen Schneidverfahrens nachführen zu können. Dadurch können die Verfahrensführung sowie auch die Steuerung weiter verbessert werden.

Es wird ferner vorgeschlagen, dass das Ermitteln des Steuersignals abhängig vom Abstandsteuersignal eine Begrenzung des Abstandsteuersignals umfasst. Dadurch kann erreicht werden, dass insbesondere bei einem Anfahrvorgang mechanische Eigenschaften besser berücksichtigt werden können, beispielsweise in Bezug auf die Antriebseinheit, das Verfahren des Schneidguts beziehungsweise das Verfahren des Schneidkopfes und/oder dergleichen. Insbesondere kann dadurch die Stabilität der erfindungsgemäßen Verfahrensführung verbessert werden.

Ferner wird gemäß einer Weiterbildung vorgeschlagen, dass das Verfahren wenigstens für ein Anfahren des Schneidkopfes in eine vorgegebene Startposition genutzt wird. Vorzugsweise wird das Verfahren nur für das Anfahren genutzt. Dadurch kann die übliche Abstandsregelung weiterhin für den eigentlichen Schneidvorgang genutzt werden. Während des Anfahrens braucht der Schneidkopf selbst nicht aktiviert zu sein. Vielmehr reicht es aus, wenn der Schneidkopf erst mit Erreichen der Startposition aktiviert wird. Die Startposition ist eine Position, an die der Schneidkopf zum Beginnen des eigentlichen Schneidvorgangs positioniert wird. Mit dem Beginnen des eigentlichen Schneidvorgangs kann dann auf die übliche Abstandsregelung umgeschaltet werden. Der eigentliche Schneidvorgang bezieht sich auf ein Einbringen eines vorgegebenen Schnitts in das Schneidgut, wobei der Schnitt einen nahezu beliebigen Verlauf aufweisen kann, beispielsweise geradlinig, kurvig, eckig, Kombinationen hiervon oder dergleichen. Vorzugsweise ist der Schnitt ununterbrochen, insbesondere kontinuierlich. Die Startposition kann eine absolute Position des Schneidkopfes oder auch eine Relativposition des Schneidkopfes gegenüber dem Schneidgut sein.

Besonders vorteilhaft kann vorgesehen sein, dass das Verfahren nur in einem vorgegebenen Zeitraum und/oder Wegabschnitt genutzt wird. Hierbei kann es sich um einen Zeitraum oder auch Wegabschnitt handeln, in dem der Schneidkopf deaktiviert ist, also kein eigentlicher Schneidvorgang ausgeführt wird. Dies kann zum Beispiel neben dem Anfahren der Startposition auch ein neues Positionieren des Schneidkopfes für einen neuen Schnitt nach Beendigung des Einbringens eines ersten Schnitts sein.

Gemäß einer Weiterbildung wird vorgeschlagen, dass zwischen dem Ermitteln des Abstandsteuersignals unter Nutzung des verzögerten Ist-Stellungssignals und dem Ermitteln des Abstandsteuersignals gemäß einer üblichen Abstandsregelung gewechselt wird. Dies erlaubt es, spezifische Vorteile der jeweiligen Verfahrensführung für das Führen des Schneidkopfes abhängig von einer jeweiligen Betriebsart zu nutzen. So kann zum Beispiel ein Zeitpunkt zum Wechseln vorgesehen sein. Es kann aber auch vorgesehen sein, das der Wechsel an einer bestimmten vorgegebenen Position erfolgt. Auch Kombinationen hiervon können vorgesehen sein.

Weiterhin wird vorgeschlagen, dass das Ermitteln des Soll-Stellungssignals aus dem Positions-Sollwert umfasst, dass das Soll-Stellungssignal gegenüber dem Positions-Sollwert um eine vorgegebene zweite Zeitspanne verzögert wird. Dadurch kann die Verfahrensführung insgesamt weiter verbessert werden. Das Verzögern kann zum Beispiel mit einem Zeitglied oder dergleichen realisiert sein. Es kann aber auch durch die Rechnereinheit realisiert sein, die eine entsprechende Zeitverzögerung realisieren kann.

Eine Weiterbildung sieht vor, dass das Ermitteln des Steuersignals umfasst, dass das Steuersignal abhängig von einer zeitlichen Änderung des Soll-Stellungssignals ermittelt wird. Die zeitliche Änderung des Soll-Stellungssignals kann beispielsweise mittels eines Differenzierers oder dergleichen ermittelt werden. Darüber hinaus besteht die Möglichkeit, dass die zeitliche Änderung im Rahmen der Achs-Reglung ermittelt und realisiert wird. Auch dies kann sowohl durch separate Hardware als auch durch geeignete Programmcodeabschnitte des Rechnerprogramms realisiert sein.

Die für das erfindungsgemäße Verfahren angegebenen Vorteile und Wirkungen gelten natürlich gleichermaßen auch für die erfindungsgemäße Steuereinrichtung sowie das Rechnerprogrammprodukt gemäß der Erfindung und umgekehrt. Insofern können für Verfahrensmerkmale auch Vorrichtungsmerkmale und umgekehrt formuliert sein.

Weitere Vorteile und Merkmale ergeben sich aus der Beschreibung eines Ausführungsbeispiels anhand der beigefügten Figuren. In den Figuren bezeichnen gleiche Bezugszeichen gleiche Merkmale und Funktionen.

Es zeigen:
- FIG 1: ein schematisches Diagramm für eine Führung eines Schneidkopfes gegenüber einem Schneidgut mit einer Abstandsregelung; und
- FIG 2: eine schematische Diagrammdarstellung wie FIG 1, bei der ein Abstandsregler durch ein Ermitteln einer absoluten Schneidgutlage ersetzt ist.

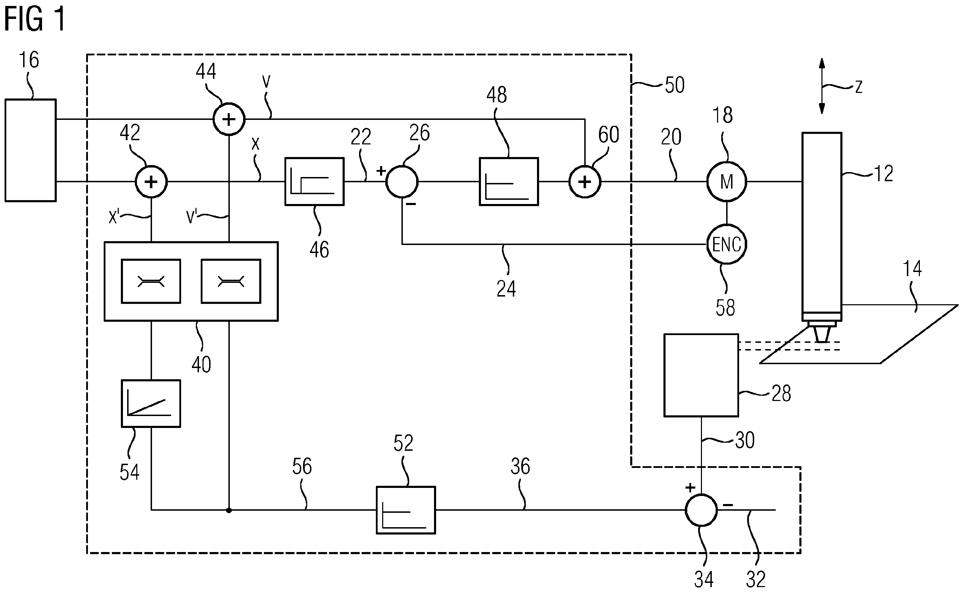

FIG 1 zeigt in einer schematischen Diagrammdarstellung eine Steuereinrichtung 50, die dazu dient, in einem Blech 14 als Schneidgut zum Ausführen eines Schneidverfahrens aufgrund einer Relativbewegung eines Laser-Schneidkopfes 12 in Bezug auf das Blech 14 einen Schnitt einzubringen. Zu diesem Zweck ist vorliegend vorgesehen, dass das Blech 14 in einer vorgegebenen nicht dargestellten Aufnahmevorrichtung fixiert angeordnet ist, damit das Schneidverfahren in vorgebbarer Weise ausgeführt werden kann. Als Schneidverfahren ist vorliegend ein Laserschneidverfahren vorgesehen. Dem Grunde nach kann jedoch auch ein anderes Schneidverfahren vorgesehen sein, beispielsweise ein Wasserstrahl-Schneidverfahren, ein Brennerschneidverfahren oder dergleichen.

Der Laser-Schneidkopf 12 ist mittels einer Antriebseinheit 18 angetrieben, um das Schneidverfahren sowie auch einen Anfahrvorgang des Laser-Schneidkopfes 12 zum Blech 14 durchzuführen. Insbesondere kann der Laser-Schneidkopf 12 mittels der Antriebseinheit 18 in eine z-Richtung verfahren werden, die im Wesentlichen orthogonal zu einem Schnittbereich auf dem Blech 14 ist. Die Antriebseinheit 18 weist hierzu eine nicht dargestellte elektrische Maschine auf, mittels der die gewünschte Antriebsfunktionalität für den Laser-Schneidkopf 12 bereitgestellt werden kann. Darüber hinaus kann die Antriebseinheit 18 auch noch ein Getriebe, einen Energiewandler wie zum Beispiel einen Wechselrichter, mit dem die elektrische Maschine in bestimmungsgemäßer Weise angetrieben werden kann, und/oder dergleichen umfassen. Diese Einheiten sind jedoch in den Figuren nicht dargestellt. Das Blech 14 ist gegenüber dem Laser-Schneidkopf 12 fixiert angeordnet.

Die Antriebseinheit 18 umfasst ferner eine Stellungsgeber 58 als Motorgeber (Motor-Encoder), mittels dem ein Ist-Stellungssignal 24, welches beispielsweise einem Positionsistwert entspricht, bereitgestellt ist, welches von einer tatsächlich momentanen Stellung der Antriebseinheit 18 abhängig ist. Vorliegend betrifft diese Stellung insbesondere die z-Richtung.

An die Steuereinrichtung 50 ist ferner ein kapazitiver Abstandsensor 28 angeschlossen, der ein Abstandsignal 30 bereitstellt. Der Abstandsensor 28 stellt das Abstandsignal 30 mit einer spezifischen Verzögerungszeit als erste Zeitspanne bereit, die vorliegend einige Millisekunden beträgt.

Die Steuereinrichtung 50 nutzt ferner einen Positions-Sollwert x sowie einen Geschwindigkeits-Sollwert v, die durch eine Interpolatoreinheit 16 zum Führen des Laser-Schneidkopfes 12 bereitgestellt sind. Die Interpolatoreinheit 16 dient unter anderem dazu, für das Schneidverfahren Folgen von Positions-Sollwerten x sowie Geschwindigkeits-Sollwerten v bereitzustellen. Die Steuereinrichtung 50 nutzt diese Werte, um ein Steuersignal 20 beziehungsweise ein Stellsignal für die Antriebseinheit 18 bereitzustellen, sodass der Laser-Schneidkopf 12 in vorgebbarer Weise geführt werden kann.

Die Steuereinrichtung 50 ist vorliegend durch eine Rechnereinheit gebildet, die ein Rechnerprogrammprodukt umfasst, welches ein Programm für die Rechnereinheit mit Programmcodeabschnitten des Programms zum Ausführen der Schritte des im Folgenden beschriebenen Verfahrens aufweist, wenn das Programm durch die Rechnereinheit ausgeführt wird, sodass die Rechnereinheit das Steuersignal 20 ermittelt und bereitstellt.

Die Steuereinrichtung 50 ist ausgebildet, das Steuersignal 20 für die Antriebseinheit 18 abhängig vom Positions-Sollwert x und vom Geschwindigkeits-Sollwert v bereitzustellen, um die Position und die Geschwindigkeit des Laser-Schneidkopfes 12 gegenüber dem Blech 14 einzustellen. Zu diesem Zweck ist die Steuereinrichtung 50 ferner ausgebildet, aus dem Positions-Sollwert x ein Soll-Stellungssignal 22, welches beispielsweise einem Positionssollwert entspricht, zu ermitteln. Zu diesem Zweck ist vorgesehen, dass mittels eines Verzögerungsglieds 46 das Soll-Stellungssignal 22 um eine vorgegebene nicht weiter definierte Zeitspanne verzögert wird.

Das von der Antriebseinheit 18 mittels des Stellungsgebers 58 bereitgestellte Ist-Stellungssignal 24 wird im Rahmen eines ersten Vergleichs mit dem Soll-Stellungssignal 22 verglichen, wobei der erste Vergleich durch einen Differenzbildner 26 gebildet ist. Das Steuersignal 20 für die Antriebseinheit 18 wird abhängig vom ersten Vergleich bereitgestellt, indem das Vergleichsergebnis des Differenzbildners 26 um einen vorgegebenen Faktor mittels eines Verstärkers 48 beziehungsweise einem Proportionalglied oder einem Proportionalregler verstärkt wird. Das verstärkte Signal wird dann zum Ermitteln des Steuersignals 20 dem Geschwindigkeits-Sollwert v mittels einer Überlagerungseinheit 60 überlagert. Hierdurch wird eine Achs-Regelung bezüglich der Bewegung des Laser-Schneidkopfes 12 in die z-Richtung bereitgestellt, die vorliegend eine Werkzeugrichtung des Schneidkopfes ist. Für die anderen etwaigen Bewegungsrichtungen des Laser-Schneidkopfes 12 können entsprechende Regelungen vorgesehen sein.

Für den bestimmungsgemäßen Betrieb zur Realisierung des Schneidverfahrens ist es wichtig, dass zwischen dem Laser-Schneidkopf 12 und dem Blech 14 ein vorgegebener Abstand möglichst genau eingehalten wird. Zu diesem Zweck wird mittels eines separaten Signals ein Vergleichsabstand 32 beziehungsweise einem Sollabstand vorgegeben, der abhängig von einem jeweils auszuführenden Schneidverfahren gewählt ist. Dieser Vergleichsabstand 32 kann fest eingestellt sein. Darüber hinaus kann er bedarfsweise jedoch auch variiert werden. Der Vergleichsabstand kann von einer separaten Einheit bereitgestellt sein. Er kann aber auch durch die Steuereinrichtung 50 selbst bereitgestellt sein.

Mittels des Abstandsensors 28 wird ein Abstand zwischen dem Laser-Schneidkopf 12 und dem Schneidgut 14 erfasst und das entsprechende Abstandsignal 30 bereitgestellt. Das Abstandssignal 30 wird dann mit dem vorgegebenen Vergleichsabstand 32 im Rahmen eines zweiten Vergleichs verglichen. Hierzu wird mittels eines Differenzbildners 34 eine Differenz zwischen dem Abstandssignal 30 und dem Vergleichsabstand 32 ermittelt, welches als Abstandsteuersignal 36 bereitgestellt wird. Das Abstandsteuersignal 36 kann einer Abstanddifferenz entsprechen.

Mittels eines Verstärkers 52 beziehungsweise eines Proportionalglieds oder eines Proportionalreglers wird das Abstandsteuersignal 36 in einer vorgebbaren Weise verstärkt und als Signal 56 bereitgestellt. Das Signal 56 dient vorliegend somit als Stellsignal für den Abstandregler. Das Signal 56 wird in einem ersten Zweig über eine Begrenzereinheit 40 geführt, wodurch ein begrenztes Signal v' bereitgestellt wird, welches vorliegend einen Zusatzsollwert für die Geschwindigkeit bildet. Das begrenzte Signal v' wird mittels einer Überlagerungseinheit 44 dem Geschwindigkeits-Sollwert v überlagert.

Darüber hinaus wird das Signal 56 in einem weiteren Zweig zunächst einem Integrierer 54 zugeführt, und das integrierte Signal wird dann ebenfalls der Begrenzereinheit 40 zugeführt, die ein Signal x' bereitstellt, welches vorliegend einen Zusatzsollwert für die Position bildet. Das Signal x' wird mittels einer Überlagerungseinheit 42 dem Positions-Sollwert x überlagert.

Die Steuereinrichtung 50 erweist sich jedoch als nachteilig dahingehend, dass der Anfahrvorgang nur mit einer begrenzten Geschwindigkeit durchgeführt werden kann, weil aufgrund der überlagerten Regelungen mit einem Überschwingen zu rechnen ist. Dadurch ist es auch erforderlich, Verstärkungsfaktoren insbesondere den des Verstärkers 52, zu begrenzen. Schließlich sind auch besondere Bedingungen in Bezug auf Stabilitätsprobleme zu beachten.

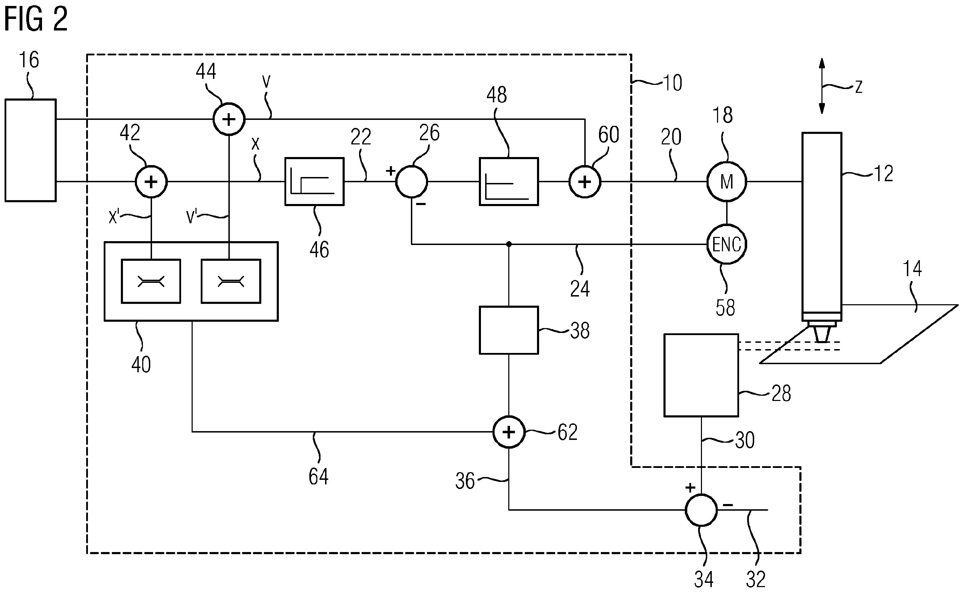

Mit einer Steuereinrichtung 10 gemäß FIG 2 können diese Probleme weitgehend reduziert werden. Die Steuereinrichtung 10 gemäß FIG 2 basiert auf der Steuereinrichtung 50 gemäß FIG 1, weshalb im Folgenden lediglich die Unterschiede erläutert werden. Bezüglich der weiteren Merkmale und Funktionen wird auf die Ausführungen zur FIG 1 verwiesen.

Die Steuereinrichtung 10 unterscheidet sich von der Steuereinrichtung 50 dadurch, dass das Abstandsteuersignal 36 von dem um eine vorgegebene erste Zeitspanne verzögerten Ist-Stellungssignal 24 überlagert wird. Zu diesem Zweck ist eine Überlagerungseinheit 62 vorgesehen. Die erste Zeitspanne ist durch ein Zeitverzögerungsglied 38 realisiert, welches durch eine Hardwareschaltung realisiert sein kann. Ist die Steuereinrichtung 10 jedoch zumindest teilweise durch ein Rechnerprogramm gebildet, kann hier eine entsprechende Rechnerfunktionalität vorgesehen sein.

Die erste Zeitspanne wird abhängig von einer Verzögerungszeit des generativen Abstandsensors 28 gewählt. Dabei handelt es sich um eine Verzögerungszeit, die der kapazitive Abstandsensor 28 benötigt, um zu einem erfassten Abstand das entsprechende Abstandsignal 30 bereitzustellen. Somit steht als Signal 64 als Ergebnis der Überlagerung durch die Überlagerungseinheit 62 ein Signal zur Verfügung, welches einer absoluten Blechposition des Blechs 14 entspricht. Das Signal 64 wird sodann unmittelbar auf die Begrenzungseinheit 40 gegeben, welche die begrenzten Signale x' und v' bereitstellt. Die weiteren Funktionen entsprechen denen, wie es bereits zur FIG 1 erläutert wurde.

Durch die geänderte Struktur der Steuereinrichtung 10 gegenüber der Steuereinrichtung 50 ist es nunmehr nicht mehr erforderlich, den Verstärker 52 vorzusehen. Ebenso kann der Integrator 54 entfallen. Die verschachtelte Regelung gemäß FIG 1 wird also in eine quasi-gesteuerte Einfachregelung überführt. Dadurch wird nicht nur die Stabilität der Regelung erheblich verbessert, sondern es ist möglich, insbesondere Anfahrvorgänge deutlich beschleunigt auszuführen. Darüber hinaus kann das bei der Steuereinrichtung 50 gemäß FIG 1 antretende Überschwingen ebenfalls weitgehend vermieden werden, wodurch die Sicherheit im bestimmungsgemäßen Betrieb weiter verbessert werden kann.

Dadurch, dass gegenüber der Steuereinrichtung 50 im Wesentlichen keine zusätzlichen neuen Hardwarekomponenten erforderlich zu sein brauchen, eignet sich die Steuereinrichtung 10 insbesondere auch für eine Nachrüstung bei bereits bestehenden Schneidvorrichtungen.

Je nach Bedarf kann darüber hinaus vorgesehen sein, dass die erste Zeitspanne in vorgebbaren Zeitabständen angepasst wird, beispielsweise, wenn sich die Verzögerungszeit des kapazitiven Abstandssensors 28 je nach Betriebszustand und Alter verändert. Dadurch kann auch während des bestimmungsgemäßen Betriebs der Schneidvorrichtung eine zuverlässige bestimmungsgemäße Funktionalität bereitgestellt werden. Die Qualität des Schneidergebnisses kann dadurch über beide Betriebsbereiche der Schneidvorrichtung im Wesentlichen konstant gehalten werden.

Die Erfindung ist jedoch nicht auf die Anwendung von kapazitiven Abstandsensoren begrenzt. Natürlich kann anstelle des kapazitiven Abstandsensors auch ein anderer Abstandsensor vorgesehen sein, der beispielsweise optisch, elektrisch, insbesondere magnetisch, induktiv oder dergleichen basiert ist.

Besonders vorteilhaft kann natürlich vorgesehen sein, dass mehrere, beispielsweise unterschiedliche, Abstandsensoren benutzt werden, und für die unterschiedlichen Abstandsensoren entsprechend zugeordnete erste Zeitspannen ermittelt werden, die dann separat mit dem Ist-Stellungssignal 24 verglichen werden können. Hierdurch kann die Funktionalität der Erfindung weiter verbessert werden, insbesondere dann, wenn das Schneidgut seine Werkstoffeigenschaften wechselt und sich zum Beispiel ein kapazitiver Abstandsensors zum Ermitteln des Abstands nicht eignet, sondern zum Beispiel umgeschaltet werden muss, zu einen induktiven Abstandsensor oder dergleichen. Dadurch kann die Flexibilität der Erfindung weiter verbessert werden.

Die Erfindung ist natürlich nicht darauf beschränkt, dass der Schneidkopf 12 gegenüber dem Schneidgut 14 verfahren wird. Natürlich ist auch eine duale Ausgestaltung denkbar, bei der das Schneidgut 14 gegenüber dem Schneidkopf 12 verfahren wird. Auch Kombinationen hiervon können vorgesehen sein, ohne den Gedanken der Erfindung zu verlassen.

Schließlich kann die Erfindung natürlich auch mit einer üblichen Abstandsregelung kombiniert werden. Vorzugsweise kann ein Wechsel zu vorgebbaren Zeitpunkten und/oder Positionen erfolgen.

Das Ausführungsbeispiel dient ausschließlich der Erläuterung der Erfindung und soll diese nicht beschränken.

## Patentansprüche

1. Verfahren zum Führen eines Schneidkopfes (12) gegenüber einem Schneidgut (14), in das mittels eines durch den Schneidkopf (12) ausgeführten Schneidverfahrens aufgrund einer Relativbewegung des Schneidkopfes (12) in Bezug auf das Schneidgut (14) ein Schnitt eingebracht wird, wobei
- wenigstens ein Positions-Sollwert (x) und wenigstens ein Geschwindigkeits-Sollwert (v) zum Führen des Schneidkopfes (12) durch eine Interpolatoreinheit (16) bereitgestellt wird,
- eine Position und eine Geschwindigkeit des Schneidkopfes (12) gegenüber dem Schneidgut (14) mittels einer Antriebseinheit (18) abhängig vom Positions-Sollwert (x) und vom Geschwindigkeits-Sollwert (v) eingestellt wird, indem aus dem Positions-Sollwert (x) ein Soll-Stellungssignal (22) ermittelt, ein von der Antriebseinheit (18) bereitgestelltes Ist-Stellungssignal (24) mit dem Soll-Stellungssignal (22) im Rahmen eines ersten Vergleichs (26) verglichen und ein Steuersignal (20) für die Antriebseinheit (18) abhängig vom ersten Vergleich (26) und dem Geschwindigkeits-Sollwert (v) ermittelt wird,
- mittels eines Abstandsensors (28) ein Abstand zwischen dem Schneidkopf (12) und dem Schneidgut (14) erfasst und ein entsprechendes Abstandsignal (30) bereitgestellt wird,
- das Abstandsignal (30) mit einem vorgegebenen Vergleichsabstand (32) im Rahmen eines zweiten Vergleichs (34) verglichen und abhängig vom zweiten Vergleich (34) ein Abstandsteuersignal (36) ermittelt wird, und
- das Steuersignal (20) ergänzend abhängig vom Abstandsteuersignal (36) ermittelt wird,
**dadurch gekennzeichnet, dass**
der Vergleichsabstand (32) vom Abstandsignal (30) subtrahiert und die hierdurch ermittelte Differenz dem um eine erste Zeitspanne (38) verzögerten Ist-Stellungssignal (24) überlagert wird, um das Abstandsteuersignal (36) zu ermitteln, wobei die erste Zeitspanne (38) von einer Verzögerungszeit des Abstandsensors (28) abhängig ist, die der Abstandsensor (28) benötigt, um zu einem erfassten Abstand das entsprechende Abstandsignal (30) bereitzustellen.

2. Verfahren nach Anspruch 1, **dadurch gekennzeichnet, dass** der Schneidkopf (12) zum Ermitteln der ersten Zeitspanne (38) gemäß einem vorgegebenen Bewegungsprofil verfahren wird und das Abstandsignal (30) des Abstandsensors (28) entsprechend ausgewertet wird.

3. Verfahren nach Anspruch 1 oder 2, **dadurch gekennzeichnet, dass** das Ermitteln der ersten Zeitspanne (38) zu einem vorgegebenen Zeitpunkt erfolgt.

4. Verfahren nach einem der vorhergehenden Ansprüche, **dadurch gekennzeichnet, dass** das Ermitteln des Steuersignals (20) abhängig vom Abstandsteuersignal (36) eine Begrenzung des Abstandsteuersignals (36) umfasst.

5. Verfahren nach einem der vorhergehenden Ansprüche, **dadurch gekennzeichnet, dass** das Verfahren wenigstens für ein Anfahren des Schneidkopfes in eine vorgegebene Startposition genutzt wird.

6. Verfahren nach einem der vorhergehenden Ansprüche, **dadurch gekennzeichnet, dass** zwischen dem Ermitteln des Abstandsteuersignals (36) unter Nutzung des verzögerten Ist-Stellungssignals (24) und dem Ermitteln des Abstandsteuersignals (36) gemäß einer üblichen Abstandsregelung gewechselt wird.

7. Verfahren nach einem der vorhergehenden Ansprüche, **dadurch gekennzeichnet, dass** das Ermitteln des Steuersignals (20) umfasst, dass abhängig vom ersten Vergleich (26) eine zeitliche Änderung des Soll-Stellungssignals (22) berücksichtigt wird.

8. Verfahren nach einem der vorhergehenden Ansprüche, **dadurch gekennzeichnet, dass** das Ermitteln des Soll-Stellungssignals (22) aus dem Positions-Sollwert (x) umfasst, dass das Soll-Stellungssignal (22) gegenüber dem Positions-Sollwert (x) um eine vorgegebene zweite Zeitspanne (46) verzögert wird.

9. Rechnerprogrammprodukt umfassend ein Programm für eine Rechnereinheit (10) mit Programmkodeabschnitten des Programms zum Ausführen der Schritte eines Verfahrens nach einem der vorhergehenden Ansprüche, wenn das Programm durch die Rechnereinheit ausgeführt wird, sodass die Rechnereinheit (10) ein Steuersignal (20) ermittelt.

10. Rechnerprogrammprodukt nach Anspruch 9, **dadurch gekennzeichnet, dass** das Rechnerprogrammprodukt ein rechnerlesbares Medium umfasst, auf welchem die Programmkodeabschnitte zumindest teilweise gespeichert sind.

11. Rechnerprogrammprodukt nach Anspruch 9 oder 10, **dadurch gekennzeichnet, dass** die Programmkodeabschnitte direkt in einen internen Speicher der Rechnereinheit (10) ladbar sind.

12. Steuereinrichtung (10) zum Führen eines Schneidkopfes (12) gegenüber einem Schneidgut (14), um in das Schneidgut (14) mittels eines durch den Schneidkopf (12) ausgeführten Schneidverfahrens aufgrund einer Relativbewegung des Schneidkopfes (12) in Bezug auf das Schneidgut (14) einen Schnitt einzubringen, wobei die Steuereinrichtung (10) ausgebildet ist,
- wenigstens einen Positions-Sollwert (x) und wenigstens einen Geschwindigkeits-Sollwert (v), die zum Führen des Schneidkopfes (12) durch eine Interpolatoreinheit (16) bereitgestellt sind, zu nutzen,
- ein Steuersignal (20) für eine Antriebseinheit (18) abhängig vom Positions-Sollwert (x) und vom Geschwindigkeits-Sollwert (v) bereitzustellen, um eine Position und eine Geschwindigkeit des Schneidkopfes (12) gegenüber dem Schneidgut (14) einzustellen, zu welchem Zweck die Steuereinrichtung (10) ausgebildet ist, aus dem Positions-Sollwert (x) ein Soll-Stellungssignal (22) zu ermitteln, ein von der Antriebseinheit (18) bereitgestelltes Ist-Stellungssignal (24) mit dem Soll-Stellungssignal (22) im Rahmen eines ersten Vergleichs (26) zu vergleichen und das Steuersignal (20) für die Antriebseinheit (18) abhängig vom ersten Vergleich (26) und dem Geschwindigkeits-Sollwert (v) zu ermitteln,
- ein mittels eines Abstandsensors (28) bereitgestelltes Abstandsignal (30), der einen Abstand zwischen dem Schneidkopf (12) und dem Schneidgut (14) erfasst, zu nutzen,
- das Abstandsignal (30) mit einem vorgegebenen Vergleichsabstand (32) im Rahmen eines zweiten Vergleichs (34) zu vergleichen und abhängig vom zweiten Vergleich (34) ein Abstandsteuersignal (36) zu ermitteln, und
- das Steuersignal (20) ergänzend abhängig vom Abstandsteuersignal (36) zu ermitteln,
**dadurch gekennzeichnet, dass**
die Steuereinrichtung (10) ausgebildet ist, den Vergleichsabstand (32) vom Abstandsignal (30) zu subtrahieren und die hierdurch ermittelte Differenz dem um eine erste Zeitspanne (38) verzögerten Ist-Stellungssignal (24) zu überlagern, um das Abstandsteuersignal (36) zu ermitteln, wobei die erste Zeitspanne (38) von einer Verzögerungszeit des Abstandsensors (28) abhängig ist, die der Abstandsensor (28) benötigt, um zu einem erfassten Abstand das entsprechende Abstandsignal (30) bereitzustellen.
